# EUROPÄISCHE PATENTSCHRIFT

(11) **EP 4 313 732 B1**
(45) Veröffentlichungstag und Bekanntmachung des Hinweises auf die Patenterteilung: **13.08.2025**
(21) Anmeldenummer: 22714379.9
(22) Anmeldetag: 10.03.2022
(51) Int. Cl.: B62D 15/02, B60W 30/06, G08G 1/16

(54) **VERFAHREN ZUM BESTIMMEN EINER POSITION UND AUSRICHTUNG EINES FAHRZEUGS INNERHALB EINER VON EINEM PARKPLATZ UMFASSTEN ABHOLPOSITION**
METHOD FOR DETERMINING THE POSITION AND ORIENTATION OF A VEHICLE WITHIN A RETRIEVAL POSITION WHICH IS ENCOMPASSED BY A PARKING AREA
PROCÉDÉ DE DÉTERMINATION DE LA POSITION ET DE L'ORIENTATION D'UN VÉHICULE DANS UNE POSITION DE RÉCUPÉRATION COUVERTE PAR UNE ZONE DE STATIONNEMENT

(30) Priorität: 29.03.2021 DE 102021203107
(43) Veröffentlichungstag der Anmeldung: 07.02.2024
(73) Patentinhaber: Robert Bosch GmbH, 70442 Stuttgart (DE)
(72) Erfinder: NORDBRUCH, Stefan, 71229 Leonberg (DE); NICODEMUS, Rolf, 74321 Bietigheim-Bissingen (DE)
(86) Internationale Anmeldenummer: PCT/EP2022/056211
(87) Internationale Veröffentlichungsnummer: WO 2022/207271

(56) Entgegenhaltungen:
- CN-A- 108 616 807
- DE-A1- 102016 008 747
- DE-A1- 102016 219 698
- DE-A1- 102019 125 781
- DE-A1- 102019 206 210
- US-A1- 2021 086 757

## Beschreibung

Die Erfindung betrifft ein Verfahren zum Bestimmen einer von einem Parkplatz umfassten Abholposition für ein Fahrzeug, an welcher das Fahrzeug nach einem automatischen Parkvorgang abgeholt werden soll. Die Erfindung betrifft ferner ein entsprechendes Endgerät, einen entsprechenden Parkplatzserver, einen entsprechenden Parkplatz sowie ein Computerprogramm.

### Stand der Technik

Die Offenlegungsschrift DE 10 2019 121 199 A1 offenbart eine Fahrzeugsteuerung und ein computerlesbares Aufzeichnungsmedium zum Steuern eines Fahrzeugs.

Die Offenlegungsschrift US 2020/0207335 A1 zeigt ein Verfahren zum Betreiben eines Fahrzeugs sowie ein Computerprogramm.

Die Offenlegungsschrift DE 10 2012 222 562 A1 zeigt ein System für bewirtschaftete Parkflächen zur Überführung eines Fahrzeugs von einer Startposition in eine Zielposition.

Die Offenlegungsschrift US 2021/0086757 A1 zeigt ein automatisches Parksystem für eine Vielzahl autonom fahrender Fahrzeuge auf einem Parkplatz. Auf Anfrage wird ein Fahrzeug an einer Abholposition bereitgestellt.

Die Offenlegungsschrift DE 10 2019 206 210 A1 zeigt ein Verfahren zum Betrieb eines Kraftfahrzeugs mit einer Selbstparkfunktion. Bei Bedarf wird das Fahrzeug in einer bestimmten Orientierung in einer Übergabezone bereitgestellt.

Die Offenlegungsschrift CN 108 616 807 A zeigt ein intelligentes Fahrzeugabholverfahren. Das Verfahren wird zur Steuerung eines Fahrzeugs verwendet, um automatisch zu einem Abholort zu fahren. Dabei wird eine Kommunikationsverbindung mit einem Fahrzeug aufgebaut, eine Fahrzeugabholposition wird an das Fahrzeug gesendet und das Fahrzeug fährt automatisch zu der Abholposition.

Die Offenlegungsschrift DE 10 2016 008 747 A1 offenbart ein Verfahren zum Steuern des Bereitstellungsbetriebs für Kraftfahrzeuge in einer Parkumgebung, in der gesteuert durch eine Verwaltungseinrichtung der Parkumgebung Kraftfahrzeuge nach Abgabe durch den Fahrer automatisch einparkbar und nach Feststellung eines Abholwunsches durch den Fahrer an eine Abholposition in einem Abholbereich ausparkbar sind.

Bei einem vollautomatisierten (autonomen) sogenannten Valet Parking wird ein Fahrzeug von seinem Fahrer auf einer Abgabestelle, zum Beispiel vor einem Parkhaus geparkt und von da fährt das Fahrzeug selber in eine Parkposition / Parkbucht von dort in eine Abholposition, wo der Fahrer nach Ende der Parkdauer sein Fahrzeug wieder abholen kann.

Parkplätze können zum Beispiel mehrere Ausfahrten aufweisen. In einem solchen Fall kann zum Beispiel vorgesehen sein, dass jeder der Ausfahrten eine oder mehrere Abholstellen oder Abholpositionen zugeordnet sind, an welcher das Fahrzeug nach einer Durchführung eines vollautomatisierten Valet Parkings vom Fahrer abgeholt werden soll.

### Offenbarung der Erfindung

Die der Erfindung zugrundeliegende Aufgabe ist darin zu sehen, ein effizientes Konzept zum effizienten Bestimmen einer Position und Ausrichtung eines Fahrzeugs innerhalb einer von einem Parkplatz umfassten Abholposition für ein Fahrzeug bereitzustellen, an welcher das Fahrzeug nach einem automatischen Parkvorgang abgeholt werden soll.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt wird ein Verfahren zum Bestimmen einer Position und Ausrichtung eines Fahrzeugs innerhalb einer von einem Parkplatz umfassten Abholposition, an welcher das Fahrzeug nach einem automatischen Parkvorgang abgeholt werden soll, vorgeschlagen. Erfindungsgemäß erfolgt das Bestimmen der Position und Ausrichtung des Fahrzeugs innerhalb der Abholposition abhängig von mindestens einer vorgegebenen Komfortbedingung. Die Komfortbedingung umfasst hierbei insbesondere
- einem Mindestabstand einer oder mehrerer Seitenflächen oder Türen des Fahrzeugs zu einem oder mehreren Strukturelementen des Parkplatzes und/oder anderen Fahrzeugen und/oder einer Fahrbahn und/oder einem Fußgängerweg;
   und/oder
- eine bestimmte Ausrichtung des Fahrzeugs in Bezug auf eine Fahrbahnrichtung.

Das Fahrzeug wird erfindungsgemäß automatisiert in der bestimmten Position und Ausrichtung innerhalb der Abholposition bereitgestellt.

Unter Türen des Fahrzeugs sollen erfindungsgemäß sowohl die Seitentüren eines Kraftfahrzeugs, und/oder eine Kofferraumtür bzw. Heckklappe und/oder eine Motorhaube und/oder eine Tür zu einer Ladefläche des Fahrzeugs verstanden werden.

Unter einer Fahrbahnrichtung, soll insbesondere eine vorgesehene Fahrtrichtung des Fahrzeugs auf einer Fahrbahn des Parkplatzes verstanden werden, beispielsweise einer Fahrbahn, die zu einer Ausfahrt des Parkplatzes führt.

Der Parkplatz umfasst mehrere verschiedene Abholpositionen. Es wird mindestens eine der Abholpositionen, an welcher das Fahrzeug des Nutzers nach einem automatischen Parkvorgang abgeholt werden soll, abhängig von der mindestens einen vorgegebenen Komfortbedingung ausgewählt und eine Position und Ausrichtung des Fahrzeugs innerhalb der ausgewählten Abholposition wird abhängig von der mindestens einen vorgegebenen Komfortbedingung bestimmt.

Damit wird insbesondere der technische Vorteil erzielt, dass der Abholvorgang des Fahrzeugs durch einen Fahrer oder Nutzer besonders effizient erfolgen kann.

In einer besonders bevorzugten Ausführung werden mindestens zwei Abholpositionen ausgewählt und jeweils eine Position und Ausrichtung des Fahrzeugs innerhalb der ausgewählten Abholpositionen bestimmt wird. Das Fahrzeug kann nun während des Abholvorgangs zwischen den mindestens zwei ausgewählten Abholpositionen automatisch umgeparkt werden.

Dadurch können vorteilhaft auch scheinbar widersprüchliche Komfortbedingungen erfüllt werden.

Alternativ oder zusätzlich können innerhalb einer ausgewählten Abholposition mindestens zwei unterschiedliche Positionen und/oder Ausrichtungen des Fahrzeugs innerhalb der ausgewählten Abholposition bestimmt werden, die beispielsweise unterschiedlichen Komfortbedingungen entsprechen. Das Fahrzeug kann während des Abholvorgangs zwischen diesen unterschiedlichen Positionen und/oder Ausrichtungen des Fahrzeugs innerhalb der ausgewählten Abholposition automatisch umgeparkt werden.

Dadurch können vorteilhaft mehrere, auch scheinbar widersprüchliche Komfortbedingungen erfüllt werden.

Die Komfortbedingung oder die Komfortbedingungen können bevorzugt während eines Reservierens einer vom Parkplatz umfassten Parkposition von einem Nutzer des Fahrzeugs vorgegeben werden. Dazu kann der Nutzer explizit eine Komfortbedingung, wie z.B. einen definierten Mindestabstand einer oder mehrerer Seitenflächen oder Türen des Fahrzeugs zu einem oder mehreren Strukturelementen des Parkplatzes und/oder anderen Fahrzeugen und/oder einer Fahrbahn und/oder einem Fußgängerweg, und/oder eine bestimmte Ausrichtung des Fahrzeugs vorgeben. Alternativ oder zusätzlich kann der Nutzer einen bestimmten Vorgang spezifizieren, der beim Abholen des Fahrzeugs durchgeführt werden soll, insbesondere ein Beladen des Kofferraums des Fahrzeugs und/oder ein Einsteigen von Passagieren und/oder ein Losfahren in eine bestimmte Richtung.

In einer bevorzugten Ausführung werden dem Nutzer eine oder mehrere Abholpositionen für die die Komfortbedingungen erfüllbar sind, zur Auswahl vorgeschlagen werden. Der Nutzer kann sich daraufhin entscheiden, an welcher der Abholpositionen das Fahrzeug bereitgestellt werden soll. Alternativ kann auch eine automatische Auswahl erfolgen.

Besonders bevorzugt wird hierbei eine Abholposition und/oder eine Position und Ausrichtung des Fahrzeugs innerhalb der Abholposition außerdem abhängig von
- einem aktuellen Verkehrsgeschehen innerhalb des Parkplatzes (401) und/oder
- Erfahrungen aus den vorangehenden Buchungen und/oder Abholungen des Nutzers und/oder
- einer Anzahl der bekannten und/oder ermittelten Passagiere des Fahrzeugs und/oder
- aufgrund von Analysen des/der Passagiere, insbesondere von mitgeführten Objekten,
vorgeschlagen oder ausgewählt.

Gemäß einem weiteren Aspekt wird ein Endgerät zum Vorgeben von Komfortbedingungen für einen Abholvorgang eines auf einem Parkplatz automatisiert geparkten Fahrzeugs vorgeschlagen, umfassend:
- eine erste Erfassungseinrichtung zum Erfassen mindestens einer Komfortbedingung für den Abholvorgang, wobei eine Komfortbedingung insbesondere umfasst:
   - einem Mindestabstand einer oder mehrerer Seitenflächen des Fahrzeugs zu einem oder mehreren Strukturelementen des Parkplatzes und/oder anderen Fahrzeugen und/oder einer Fahrbahn und/oder einem Fußgängerweg und/oder
   - eine bestimmte Ausrichtung des Fahrzeugs in Bezug auf eine Ausfahrrichtung;

Dazu kann das Endgerät beispielsweise eine Liste von möglichen Komfortbedingungen vorgeben aus denen ein Nutzer eine oder mehrere Komfortbedingungen auswählen kann.

Das Endgerät umfasst außerdem eine Kommunikationsschnittstelle zum Übermitteln von Daten, die insbesondere die erfassten Komfortbedingungen repräsentieren, an einen Parkplatzserver.

Das Endgerät kann bevorzugt ausgebildet sein, eine Position und Ausrichtung des Fahrzeugs innerhalb einer Abholposition abhängig von den erfassten Komfortbedingungen zu bestimmen und mittels der Kommunikationsschnittstelle über ein Kommunikationsnetzwerk an einen Parkplatzserver zum Betreiben eines Parkplatzes zu senden, so dass der Parkplatzserver basierend auf der Abholposition und der bestimmten Position und Ausrichtung des Fahrzeugs innerhalb einer Abholposition den automatischen Parkvorgang des Fahrzeugs steuern kann. Dazu kann das Endgerät beispielsweise eine entsprechende Bestimmungseinrichtung aufweisen.

Damit wird der Vorteil erzielt, dass die Rechenleistung des Endgeräts effizient genutzt werden kann, um eine Position und Ausrichtung des Fahrzeugs innerhalb einer Abholposition abhängig von den erfassten Komfortbedingungen zu bestimmen und diese Informationen einem Parkplatzserver zur Verfügung stellen kann.

Bevorzugt ist das Endgerät eingerichtet, mindestens eine von einem Parkplatz umfasste Abholposition für ein Fahrzeug, an welcher das Fahrzeug nach einem automatischen Parkvorgang abgeholt werden soll zur Auswahl anzubieten. Dazu kann das Endgerät eine Anzeigeeinrichtung zum Anzeigen mindestens einer vom Parkplatz umfassten Abholposition und eine zweite Erfassungseinrichtung zum Erfassen eines Auswahlwunsches eines Nutzers des Fahrzeugs für eine der angezeigten Abholpositionen, sowie eine Bestimmungseinrichtung zum Bestimmen derjenigen Abholposition der mehreren Abholpositionen als die Abholposition, an welcher das Fahrzeug des Nutzers nach einem automatischen Parkvorgang abgeholt werden soll, die dem erfassten Auswahlwunsch entspricht, umfassen. In diesem Fall ist die Kommunikationsschnittstelle des Endgeräts zum Übermitteln der bestimmten Abholposition und einer der bestimmten Position und Ausrichtung des Fahrzeugs innerhalb der ausgewählten Abholposition an den Parkplatzserver ausgebildet.

Damit kann effizient erfasst werden, an welcher Abholposition, insbesondere im Fall von mehreren zur Verfügung stehenden Abholpositionen, der Fahrer bzw. Nutzer ein Fahrzeug nach Beendigung der Parkdauer oder nach Anforderung abholen bzw. übernehmen möchte. Das Fahrzeug kann dann automatisiert zu dieser Abholposition geführt werden und dort gemäß den vorgegebenen Komfortbedingungen positioniert und ausgerichtet werden.

Besonders bevorzugt ist das Endgerät eingerichtet, dem Nutzer mindestens einen Vorschlag für eine Abholposition und/oder eine Position und Ausrichtung des Fahrzeugs innerhalb einer Abholposition abhängig von
- dem aktuellen Verkehrsgeschehen innerhalb des Parkplatzes und/oder
- Erfahrungen aus den vorangehenden Buchungen und/oder Abholungen und/oder
- der Anzahl der bekannten und/oder ermittelten Passagiere des Fahrzeugs und/oder
- aufgrund von Analysen des/der Passagiere, insbesondere von mitgeführten Objekten
auszugeben.

Dazu kann das Endgerät beispielsweise aktuelle Informationen von einem Verwaltungssystem des Parkplatzes empfangen und verarbeiten. Die Informationen können beispielsweise das aktuelle Verkehrsgeschehen innerhalb des Parkplatzes betreffen. Alternativ oder zusätzlich kann das Endgerät beispielsweise Informationen früherer Parkvorgänge verarbeiten, um eine Vorhersage über eine von dem Nutzer bevorzugte Abholposition und/oder Komfortbedingung zu treffen. Alternativ oder zusätzlich kann das Endgerät Informationen von Sensoren, beispielsweise Kamerasensoren, verarbeiten, um beispielsweise festzustellen, wie viele Passagiere das Fahrzeug bei dem Abholvorgang aufnehmen soll und ob und wie viele Gepäckstücke die Passagiere mit sich führen und/oder wie groß die Gepäckstücke sind. Die Sensoren können am Endgerät angebracht sein und/oder innerhalb des Parkplatzes.

Gemäß einem weiteren Aspekt der Erfindung wird ein Parkplatzserver zum Betreiben eines Parkplatzes bereitgestellt, umfassend:
- eine Recheneinheit, welche ausgebildet ist, ein erfindungsgemäßes Verfahren auszuführen, und
- eine Kommunikationsschnittstelle, die ausgebildet ist, über ein Kommunikationsnetzwerk Daten repräsentierend mindestens eine Komfortbedingung und/oder Daten repräsentierend eine Position und Ausrichtung eines Fahrzeugs innerhalb einer von dem Parkplatz umfassten Abholposition von einem Endgerät, insbesondere einem wie zuvor beschrieben ausgebildeten Endgerät zu empfangen.
Der Parkplatzserver ist ausgebildet, einen automatischen Parkvorgang für ein Fahrzeug basierend auf der bestimmten Position und Ausrichtung des Fahrzeugs innerhalb einer Abholposition zu steuern.

Eine Kommunikationsschnittstelle des Parkplatzservers ist insbesondere ausgebildet, Positionsdaten von mehreren vom Parkplatz umfassten Abholpositionen über ein Kommunikationsnetzwerk an ein Endgerät eines Nutzers zu senden, so dass das Endgerät basierend auf den Positionsdaten die mehreren Abholpositionen anzeigen kann.

Gemäß einem weiteren Aspekt wird ein Parkplatz für Fahrzeuge bereitgestellt, der insbesondere für das Durchführen von automatischen bzw. automatisierten Parkvorgängen (Automatisiertes Valet Parking) ausgebildet ist, umfassend:
- mehrere Abholpositionen, an denen ein Fahrzeug nach einer Durchführung eines automatischen Parkvorgangs abgeholt werden kann, und
- einen erfindungsgemäß ausgebildeten Parkplatzserver.

Gemäß einem weiteren Aspekt wird ein Computerprogramm, umfassend Programmcode zur Durchführung eines erfindungsgemäßen Verfahrens breitgestellt, wenn das Computerprogramm auf einem Computer ausgeführt wird.

Nach einer Ausführungsform umfasst das Kommunikationsnetzwerk ein Mobilfunknetzwerk und/oder ein WLAN-Netzwerk.

Die Kommunikationsschnittstelle kann beispielsweise zur Drahtloskommunikation ausgebildet sein und eine ausgewählte Abholposition und/oder die bestimmte Position und Ausrichtung des Fahrzeugs innerhalb einer Abholposition insbesondere mittels Drahtloskommunikation nach einem oder mehreren der Kommunikationsstandards Wifi, Mobilfunk (4G, 5G, 6G), Bluetooth, BLE oder mittels einem anderen, beispielsweise proprietären, Kommunikationsprotokoll an den Parkplatzserver senden.

In einer weiteren Ausführungsform ist respektive wird eine Kommunikation über das Kommunikationsnetzwerk verschlüsselt.

Das Endgerät kann beispielsweise als mobiles Endgerät ausgebildet sein, insbesondere als Smartphone oder Tabletcomputer, auf dem insbesondere eine entsprechende Software ("App") implementiert ist, die die genannten Funktionalitäten aufweist. Das Endgerät weist insbesondere ein Display mit einer grafischen Benutzeroberfläche auf. Als Erfassungseinrichtung kann beispielsweise eine berührungsempfindliche Oberfläche es Displays des Endgeräts (Touchscreen) bzw. ein bestimmter, durch die App bestimmter Bereich davon genutzt werden. Es können grafische Eingabemittel, z.B. in Form von Symbolen und/oder eine schematische Darstellung einer Karte des Parkplatzes genutzt werden, mittels denen ein Nutzer Komfortbedingungen für einen Abholvorgang eines auf einem Parkplatz automatisiert geparkten Fahrzeugs eingeben kann.

Nach einer Ausführungsform ist das Fahrzeug ein Kraftfahrzeug. Das Kraftfahrzeug ist zum Beispiel ein Personenkraftwagen (PKW) oder ein Lastkraftwagen (LKW). Nach einer Ausführungsform ist das Kraftfahrzeug ein zweirädriges Kraftfahrzeug, also zum Beispiel ein Motorrad.

Technische Funktionalitäten des Verfahrens respektive des Endgeräts respektive des Parkplatzservers ergeben sich in analoger Weise aus entsprechenden technischen Funktionalitäten des Parkplatzservers respektive des Endgeräts respektive des Verfahrens und umgekehrt.

Das Endgerät ist zum Beispiel ausgebildet, das Verfahren aus- oder durchzuführen.

Die Formulierung "respektive" umfasst insbesondere "und/oder".

### Kurzbeschreibung der Figuren

Unter Bezugnahme auf die beigefügten Figuren werden Ausführungsformen der Erfindung im Detail beschrieben.

### Bevorzugte Ausführungen der Erfindung

Die Erfindung wird im Folgenden anhand von bevorzugten Ausführungsbeispielen näher erläutert.

In der nachfolgenden Beschreibung der Ausführungsbeispiele der Erfindung werden gleiche Elemente mit gleichen Bezugszeichen bezeichnet, wobei auf eine wiederholte Beschreibung dieser Elemente gegebenenfalls verzichtet wird. Die Figuren stellen den Gegenstand der Erfindung nur schematisch dar.

Hierbei zeigen
Fig. 1 ein Ablaufdiagramm eines Verfahrens zum Bestimmen einer Position und Ausrichtung eines Fahrzeugs innerhalb einer von einem Parkplatz umfassten Abholposition
Fig. 2 ein Endgerät,
Fig. 3 einen Parkplatzserver,
Fig. 4 einen Parkplatz und
Fig. 5 a) bis f) verschiedene Beispiele Position und Ausrichtung eines Fahrzeugs innerhalb von Abholpositionen, an welchen das Fahrzeug des Nutzers nach einem automatischen Parkvorgang abgeholt werden soll.

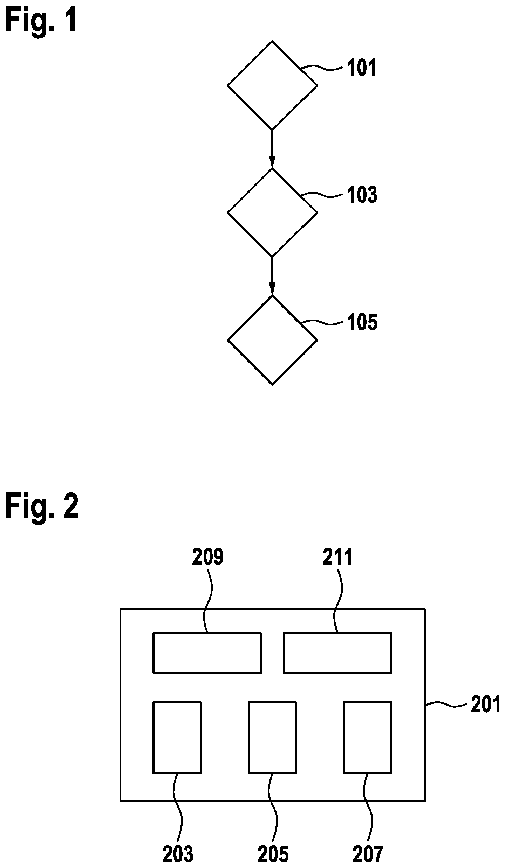

Fig. 1 zeigt ein Ablaufdiagramm eines Verfahrens zum Bestimmen einer Position und Ausrichtung eines Fahrzeugs innerhalb einer von einem Parkplatz umfassten Abholposition, an welcher das Fahrzeug nach einem automatischen Parkvorgang abgeholt werden soll.

Das Verfahren umfasst die folgenden Schritte:
- In einem ersten Schritt 101 werden eine oder mehrere Komfortbedingungen für den Abholvorgang eines automatischen Parkvorgangs vorgegeben, wobei eine Komfortbedingung insbesondere umfasst
   ∘ einem Mindestabstand einer oder mehrerer Seitenflächen oder Türen des Fahrzeugs zu einem oder mehreren Strukturelementen des Parkplatzes und/oder anderen Fahrzeugen und/oder einer Fahrbahn und/oder einem Fußgängerweg
      und/oder
   ∘ eine bestimmte Ausrichtung des Fahrzeugs in Bezug auf eine Ausfahrrichtung.
- In einem zweiten Schritt 103 wird eine Position und Ausrichtung des Fahrzeugs innerhalb einer von einem Parkplatz umfassten Abholposition derart bestimmt, dass die vorgegebenen Komfortbedingungen erfüllt sind.
- In einem dritten Schritt 105 wird Fahrzeug automatisiert in der bestimmten Position und Ausrichtung innerhalb der Abholposition bereitgestellt.

In einer Ausführungsform ist vorgesehen, dass das Fahrzeug von einer Parkposition zur ausgewählten Abholposition fahrerlos oder führerlos geführt wird. Somit kann also der Nutzer nach einem Ende des automatischen Parkvorgangs das Fahrzeug an der Abholposition abholen oder übernehmen.

Fahrerlos oder führerlos bedeutet, dass sich kein menschlicher Fahrer oder Fahrzeugführer im Fahrzeug befinden muss, um das Fahrzeug zu führen.

Der Beginn des automatischen Parkvorgangs kennzeichnet also den Beginn des führerlosen Fahrens des Fahrzeugs zur Parkposition. Das Ende des automatischen Parkvorgangs kennzeichnet also den Zeitpunkt, an welchem das Fahrzeug an einer Abholposition abgestellt wurde, nachdem es fahrerlos oder führerlos von der Parkposition zur Abholposition geführt wurde.

Fig. 2 zeigt ein Endgerät 201 zum Vorgeben von Komfortbedingungen für einen Abholvorgang eines auf einem Parkplatz automatisiert geparkten Fahrzeugs.

Das Endgerät 201 umfasst eine erste Erfassungseinrichtung 203 zum Erfassen mindestens einer Komfortbedingung für den Abholvorgang, wobei eine Komfortbedingung insbesondere umfasst:
∘ einem Mindestabstand einer oder mehrerer Seitenflächen des Fahrzeugs 1 zu einem oder mehreren Strukturelementen des Parkplatzes und/oder anderen Fahrzeugen und/oder einer Fahrbahn und/oder einem Fußgängerweg und/oder
∘ eine bestimmte Ausrichtung des Fahrzeugs in Bezug auf eine Ausfahrrichtung.

Das Endgerät umfasst außerdem eine Kommunikationsschnittstelle 207 zum Übermitteln und Empfangen von Daten an einen Parkplatzserver.

Das Endgerät 201 ist ausgebildet, eine Position und Ausrichtung des Fahrzeugs innerhalb einer Abholposition abhängig von den erfassten Komfortbedingungen zu bestimmen und mittels der Kommunikationsschnittstelle 207 über ein Kommunikationsnetzwerk an einen Parkplatzserver zum Betreiben eines Parkplatzes zu senden, so dass der Parkplatzserver basierend auf der Abholposition und der bestimmten Position und Ausrichtung des Fahrzeugs innerhalb einer Abholposition den automatischen Parkvorgang des Fahrzeugs steuern kann. Alternativ oder zusätzlich kann das Endgerät 201 ausgebildet sein, die Komfortbedingungen mittels der Kommunikationsschnittstelle 207 über das Kommunikationsnetzwerk an einen Parkplatzserver zum Betreiben eines Parkplatzes zu senden, so dass der Parkplatzserver basierend auf den Komfortbedingungen eine Position und Ausrichtung des Fahrzeugs innerhalb einer Abholposition bestimmen kann und den automatischen Parkvorgang des Fahrzeugs darauf basierend steuern kann.

Das Endgerät 201 kann außerdem eingerichtet sein, einem Nutzer mindestens eine von einem Parkplatz umfassten Abholposition von mehreren von dem Parkplatz umfassten Abholpositionen, an welcher das Fahrzeug nach einem automatischen Parkvorgang abgeholt werden soll, zur Auswahl anzubieten. Dazu kann das Endgerät zusätzlich eine Anzeigeeinrichtung 209 zum Anzeigen mindestens einer vom Parkplatz umfassten Abholposition und eine zweite Erfassungseinrichtung 205 zum Erfassen eines Auswahlwunsches eines Nutzers des Fahrzeugs für eine der angezeigten Abholpositionen und eine Bestimmungseinrichtung 211 zum Bestimmen derjenigen Abholposition der mehreren Abholpositionen als die Abholposition, an welcher das Fahrzeug des Nutzers nach einem automatischen Parkvorgang abgeholt werden soll, die dem erfassten Auswahlwunsch entspricht, und zum Bestimmen einer Position und Ausrichtung des Fahrzeugs innerhalb der ausgewählten Abholposition abhängig von den vorgegebenen Komfortbedingungen. Die Kommunikationsschnittstelle 207 kann die bestimmte Abholposition und/oder eine Position und Ausrichtung des Fahrzeugs innerhalb der bestimmten Abholposition an einen Parkplatzserver übermitteln.

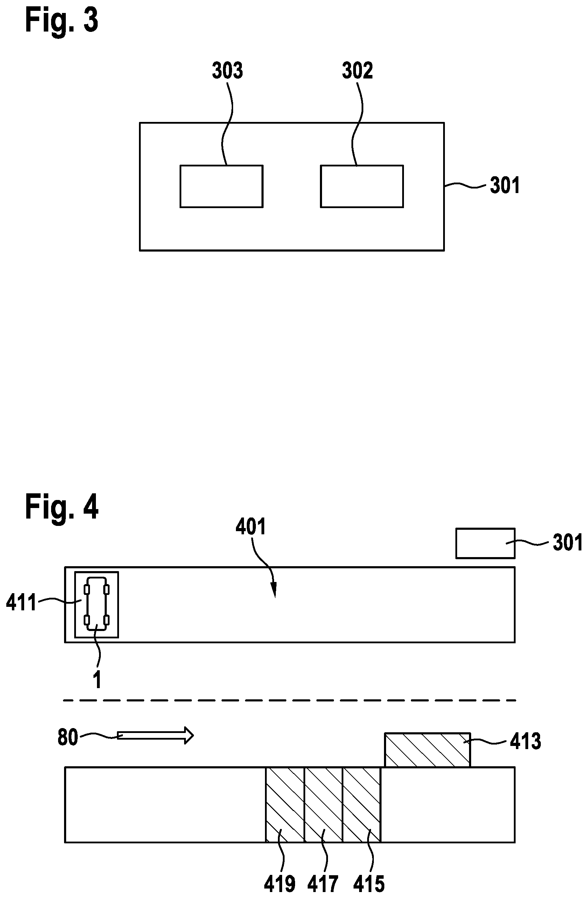

Fig. 3 zeigt einen Parkplatzserver 301 zum Betreiben eines Parkplatzes.

Der Parkplatzserver 301 umfasst eine Kommunikationsschnittstelle 303, die ausgebildet ist,
Nach einer Ausführungsform ist vorgesehen, dass der Parkplatzserver 301 mittels seiner Kommunikationsschnittstelle 303 Positionsdaten von mehreren vom Parkplatz umfassten Abholpositionen über das Kommunikationsnetzwerk an das Endgerät 201 sendet. Das Endgerät 201 umfasst zum Beispiel eine hier nicht gezeigte Kommunikationsschnittstelle, die diese Positionsdaten empfängt. Das Endgerät 201 zeigt dann mittels seiner Anzeigeeinrichtung 209 die Abholpositionen basierend auf den empfangenen Positionsdaten an. Der Nutzer wählt eine der angezeigten Abholpositionen aus. Dieser Auswahlwunsch wird mittels der Erfassungseinrichtung 205 erfasst. Die Bestimmungseinrichtung 211 wertet dann den erfassten Auswahlwunsch aus und bestimmt dann diejenige Abholposition der mehreren angezeigten Abholpositionen als die Abholposition, an welcher das Fahrzeug des Nutzers nach einem Ende des automatischen Parkvorgangs abgestellt werden soll. Dies basierend auf dem erfassten Auswahlwunsch.

Das heißt also, dass die Erfassungseinrichtung 205 lediglich den Auswahlwunsch des Nutzers erfasst. Zum Beispiel erfasst die Erfassungseinrichtung 205 ein Berühren der Anzeigeeinrichtung 209, wenn diese als eine berührungsempfindliche Anzeigeeinrichtung ausgebildet ist. Zum Beispiel erfasst die Erfassungseinrichtung 205 ein akustisches Signal oder einen akustischen Befehl, also einen akustischen Auswahlwunsch des Nutzers. Die Bestimmungseinrichtung 211 analysiert dann das akustische Signal des Nutzers dahingehend, welche der Abholpositionen der Nutzer ausgewählt hat. Insbesondere analysiert die Bestimmungseinrichtung 211 die erfasste Berührung dahingehend, welchen Bereich der Anzeigeeinrichtung der Nutzer berührt hat und somit welche der Abholpositionen er ausgewählt hat.

Das Endgerät 201 sendet dann diese bestimmte Abholposition zurück an den Parkplatzserver 301, der somit basierend auf der ausgewählten Abholposition effizient den automatischen Parkvorgang für das Fahrzeug 1 steuern kann.

Alternativ oder zusätzlich können durch das Endgerät 201 beispielsweise Daten von dem Parkplatzserver 301 empfangen werden, die den Parkplatz 401 charakterisieren, so dass das Endgerät 201 die Berechnungen durchführen kann, die zur Steuerung des automatischen Parkvorgangs für das Fahrzeug 1 benötigt werden.

Fig. 4 zeigt einen Parkplatz 401 für Fahrzeuge, der insbesondere zum automatisierten Parken der Fahrzeuge ausgebildet ist.

Innerhalb des Parkplatzes 401 sind mehrere Parkflächen oder Parkpositionen 411 gebildet, von denen der Übersichtlichkeit halber nur eine abgebildet ist. Es sind mehrere Abholpositionen 413, 415, 417, 419. An einer dieser Abholpositionen 413, 415, 417, 419 soll ein Fahrzeug nach einem automatischen Parkvorgang abgestellt werden, damit ein Nutzer das Fahrzeug 1 abholen kann. An einer dieser Abholpositionen 413, 415, 417, 419 wird also ein automatischer Parkvorgang enden. Das Fahrzeug 1 kann dabei innerhalb einer gewählten Abholposition 413, 415, 417, 419 unterschiedlich positioniert werden, beispielsweise an einem linken oder rechten Rand der jeweiligen Abholposition 413, 415, 417, 419. Die Wahl der Positionierung des Fahrzeugs 1 innerhalb einer Abholposition 413, 415, 417, 419 erfolgt abhängig von mindestens einer vorgegebenen Komfortbedingung. Eine Komfortbedingung kann zum Beispiels umfassen, dass ein Mindestabstand zwischen einer oder mehrerer Seitenflächen oder Türen des Fahrzeugs 1 zu einem oder mehreren Strukturelementen des Parkplatzes 401 und/oder anderen Fahrzeugen und/oder einer Fahrbahn und/oder einem Fußgängerweg eingehalten wird. So wird beispielsweise ein bequemes und ungefährliches Einsteigen und/oder Beladen des Fahrzeugs 1 ermöglicht. Weiterhin kann das Fahrzeug 1 bezüglich einer Fahrtrichtung unterschiedlich ausgerichtet werden. Die Wahl der Ausrichtung des Fahrzeugs 1 innerhalb einer Abholposition 413, 415, 417, 419 kann ebenfalls abhängig von mindestens einer vorgegebenen Komfortbedingung erfolgen. Zum Beispiel kann eine Komfortbedingung umfassen, dass das Fahrzeug 1 eine bestimmte Ausrichtung in Bezug auf eine Ausfahrrichtung aus der Abholposition einnimmt, so dass beispielsweise ein Rückwärts-Ausparken vermieden wird.

Der Parkplatz 401 umfasst ferner den Parkplatzserver 301 gemäß Fig. 3.

Beispielsweise gibt der Nutzer eine oder mehrere Komfortbedingungen vor, indem er eine bestimmte Situation für den Abholvorgang spezifiziert. So kann der Nutzer beispielsweise die Anzahl der Passagiere angeben und/oder die Tatsache, dass der Kofferraum des Fahrzeugs beim Abholvorgang zugänglich sein muss, damit er beladen werden kann. Daraus ergeben sich beispielsweise bestimmte Voraussetzungen für Mindestabstände von den Fahrzeugtüren und/oder bestimmte Ausrichtungen des Fahrzeugs bezüglich seiner Fahrtrichtung. Diese Voraussetzungen können als Komfortbedingungen für den Abholvorgang festgelegt werden.

Der Parkplatz umfasst in diesem Beispiel eine Mehrzahl von Abholpositionen 413, 415, 417, 419. Beispielsweise werden einem Nutzer basierend auf den vorgegebenen Komfortbedingungen auf seinem mobilen Endgerät diejenigen der verfügbaren Abholpositionen 413, 415, 417, 419 zur Auswahl angeboten, also auf einem Bildschirm (Anzeigeeinrichtung) des Endgeräts angezeigt, für die die Komfortbedingungen erfüllbar sind. Der Nutzer wählt eine dieser Abholpositionen 413, 415, 417, 419 als diejenige Abholposition aus, an welcher der Nutzer sein Fahrzeug nach dem automatischen Parkvorgang abholen will. Das mobile Endgerät sendet die ausgewählte, also bestimmte Abholposition, an den Parkplatzserver 301. Der Parkplatzserver 301 kann dann den automatischen Parkvorgang basierend auf der ausgewählten Abholposition bzw. den ausgewählten Abholpositionen effizient steuern.

Steuern kann in diesem Sinne bedeuten, dass der Parkplatzserver 301 das Fahrzeug 1 direkt kontrolliert und fährt (im Sinne einer Fernsteuerung), oder dass dem Fahrzeug 1 Ansteuerungsdaten übermittelt werden, so dass das Fahrzeug 1 selbst, also autonom, gemäß den übermittelten Ansteuerungsdaten eine Zielposition anfahren kann. Auch Kombinationen dieser beiden Ansätze sind denkbar.

Für die Durchführung eines automatischen Parkvorgangs fährt der Nutzer sein Fahrzeug 1 durch eine Einfahrt (nicht gezeigt) in den Parkplatz 401 ein und stellt sein Fahrzeug 1 an einer Abgabeposition (nicht gezeigt) ab. Er verlässt dann sein Fahrzeug 1. Das Fahrzeug 1 führt anschließend einen automatischen Parkvorgang durch und parkt somit automatisch auf einer der Parkflächen 411. Zum Beispiel fernsteuert der Parkplatzserver 301 das Fahrzeug und führt es führerlos zur Parkposition. Zum Beispiel sendet der Parkplatzserver 301 die Parkposition an das Fahrzeug 1, so dass das Fahrzeug 1 weiß, zu welcher der Parkpositionen es autonom fahren soll, um dann autonom zur Parkposition zu fahren.

Nach Ende einer Parkdauer wird das Fahrzeug 1 von der Parkposition zur ausgewählten Abholposition fahrer- oder führerlos geführt, so dass der Nutzer sein Fahrzeug an der ausgewählten Abholposition übernehmen kann.

Die Erfindung umfasst also insbesondere und unter anderem den Gedanken, dass einem Nutzer, insbesondere einem Fahrer, bei Parkplätzen die Möglichkeit gegeben wird, Komfortbedingungen für den Abholvorgang des Fahrzeugs 1 vorzugeben, wobei eine Ausrichtung und Positionierung des Fahrzeugs innerhalb einer Abholposition an der der Nutzer das Fahrzeug abholen bzw. übernehmen kann durch die Komfortbedingungen bestimmt ist.

Nach einer Ausführungsform ist vorgesehen, dass dem Nutzer, zum Beispiel dem Fahrer, verschiedene Abholpositionen, die allgemein auch jeweils als eine Pickup Zone bezeichnet werden können, angezeigt werden. Dies zum Beispiel auf seinem mobilen Endgerät. Der Nutzer, insbesondere der Fahrer, wählt dann eine gewünschte Abholposition oder eine gewünschte Pickup Zone aus. Die Anzeige und Auswahl können nach einer Ausführungsform vor einem Parken bei einer Reservierung durchgeführt werden. Insbesondere können die Anzeige und Auswahl nach einer Ausführungsform nach einem Empfang einer Abholanforderung ("Befehl Abholung" durch den Nutzer) durchgeführt werden.

Nach einer Ausführungsform wird dem Nutzer, insbesondere dem Fahrer, eine Route oder ein Weg zur ausgewählten Abholposition (Pickup Zone) mitgeteilt. Dies zum Beispiel mittels seines mobilen Endgeräts oder mittels einer Information im Parkplatz.

Dadurch wird insbesondere eine Akzeptanz eines Nutzers, insbesondere eines Fahrers, für einen solchen automatischen Parkvorgang erhöht. Das heißt also, dass der Nutzer bevorzugt den automatischen Parkvorgang durchführen lassen wird und nicht mehr selbst das Fahrzeug innerhalb des Parkplatzes fahren wird. Dadurch kann allgemein ein effizienter Betrieb des Parkplatzes erreicht werden.

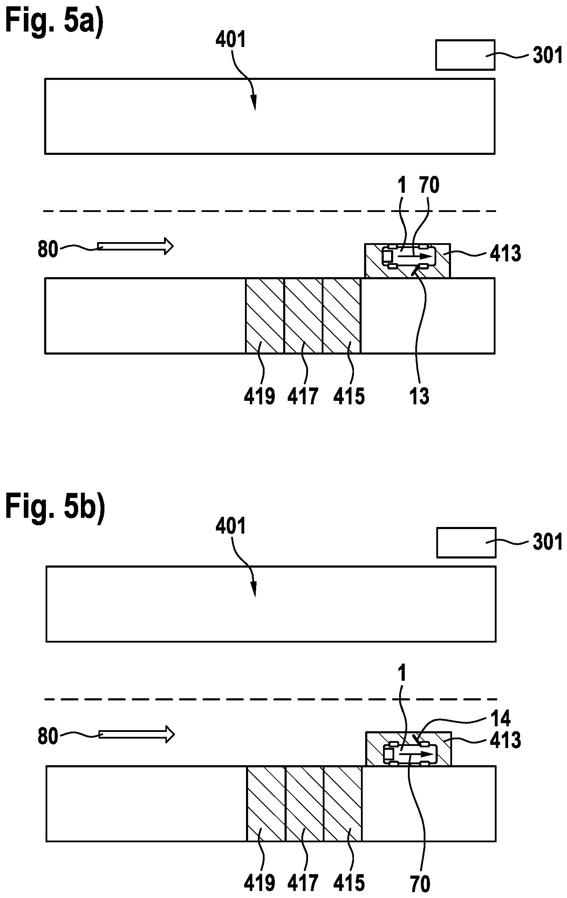

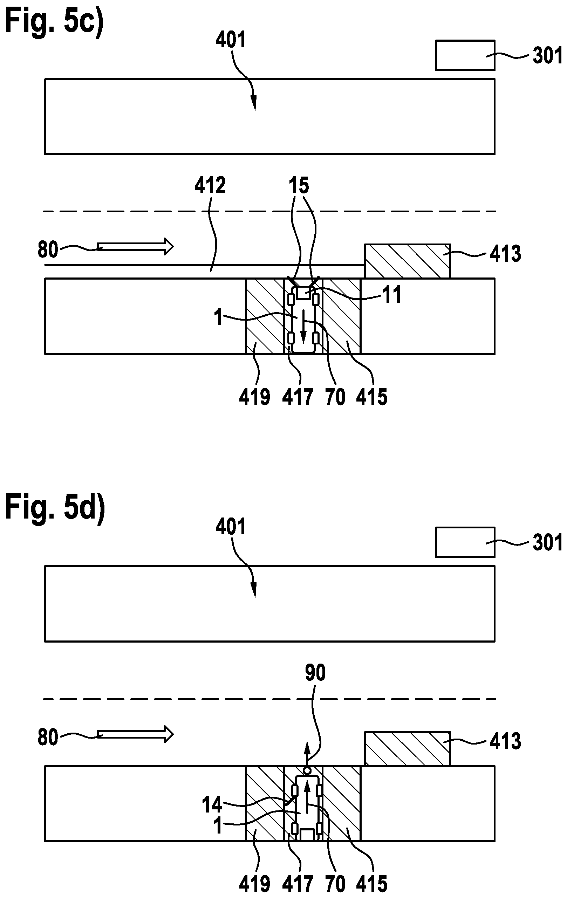

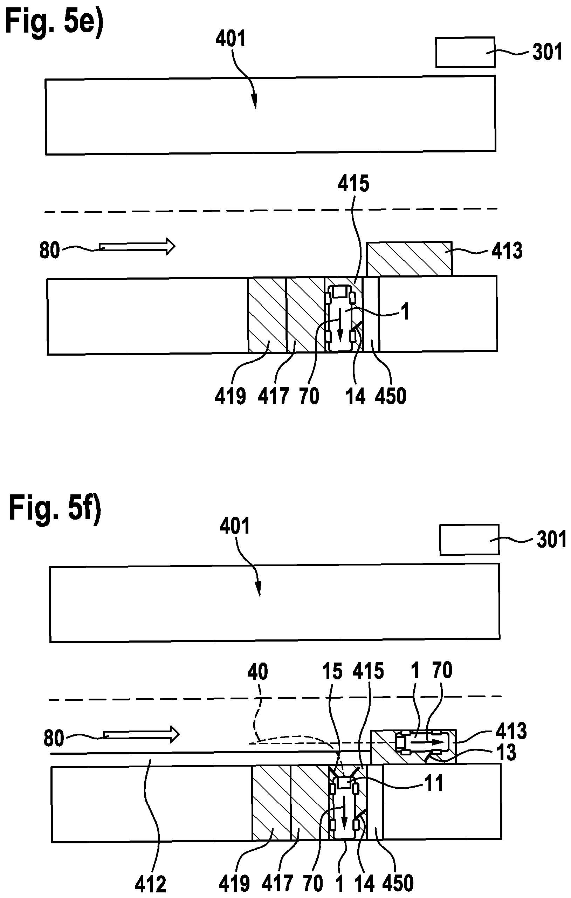

In den Figuren 5 a) bis 5 f) sind verschiedene Beispiele einer Auswahl einer Abholposition und einer Position und Ausrichtung eines Fahrzeugs innerhalb einer Abholposition abhängig von mindestens einer Komfortbedingung dargestellt. Diese Beispiele sind nicht abschließend zu verstehen, innerhalb der Erfindung ist eine Vielzahl weiterer möglicher Abholpositionen und Positionen und Ausrichtungen eines Fahrzeugs innerhalb der ausgewählten Abholposition sowie deren Kombinationen denkbar.

Ein Fahrzeug 1 befindet sich innerhalb des Parkplatzes 401, der beispielsweise gemäß Fig. 4 ausgestaltet ist, und ferner den Parkplatzserver 301 gemäß Fig. 3 umfasst. Das Fahrzeug wurde mittels eines automatisierten Parkvorgangs auf einem zugeteilten Stellplatz (nicht dargestellt) abgestellt. Beispielsweise nach Ablauf einer vorgegebenen Parkdauer oder nach einer Rückholanforderung durch einen Nutzer, wird das Fahrzeug automatisiert zu einer der mehreren Abholpositionen des Parkplatzes 401 geführt und dort dem Nutzer zur Übernahme zur Verfügung gestellt. Erfindungsgemäß wird eine Position und Ausrichtung des Fahrzeugs innerhalb der Abholposition 413, 415, 417, 419 abhängig von mindestens einer vorgegebenen Komfortbedingung gewählt.

Im Beispiel nach Figur 5 a) ist ein Fahrzeug 1 an der Abholposition 413 abgestellt. Das Fahrzeug 1 ist derart innerhalb der Abholposition 413 positioniert, dass es bezogen auf eine Vorwärtsrichtung 70 bzw. auf eine Längsachse des Fahrzeugs 1 seitlich nach links in Richtung des linken Rands der Abholposition 413 versetzt abgestellt ist. Vor dem Abholvorgang wurde Komfortbedingung gestellt, dass, dass ein Passagier durch die rechte Beifahrertür 13 bequem in das Fahrzeug 1 einsteigen kann. Diese Komfortbedingung wird durch die Position des Fahrzeugs 1 am linken Rand der Abholposition 413 erfüllt. Weiterhin ist das Fahrzeug 1 in diesem Beispiel so ausgerichtet, dass der Fahrer nach der Übernahme der Kontrolle über das Fahrzeug 1 einfach vorwärts in Fahrbahnrichtung 80 in der sich die Ausfahrt des Parkplatzes befindet, losfahren kann, insbesondere ohne ein Auspark- oder ein Wendemanöver durchführen zu müssen. Auch dies kann als Komfortbedingung vorgegeben sein.

Im Beispiel nach Figur 5 b) ist das Fahrzeug 1 an der Abholposition 413 abgestellt. Das Fahrzeug 1 ist derart innerhalb der Abholposition 413 positioniert, dass es in Bezug auf die Vorwärtsrichtung 70 bzw. die Längsachse des Fahrzeugs seitlich nach rechts in Richtung des rechten Rands der Abholposition 413 versetzt abgestellt ist. Damit wird die zuvor vorgegebene Komfortbedingung erfüllt, dass ein Fahrer durch die linke Fahrertür 14 bequem in das Fahrzeug 1 einsteigen kann. Weiterhin ist das Fahrzeug 1 in diesem Beispiel so ausgerichtet, dass der Fahrer nach der Übernahme der Kontrolle über das Fahrzeug 1 vorwärts in Richtung 80 in der sich z.B. die Ausfahrt des Parkplatzes befindet, losfahren kann, insbesondere ohne ein kompliziertes Auspark- oder ein Wendemanöver durchführen zu müssen.

Im Beispiel nach Figur 5 c) ist das Fahrzeug 1 an der Abholposition 417 quer zur Fahrbahnrichtung 80 abgestellt. Das Fahrzeug 1 ist derart innerhalb der Abholposition 417 derart ausgerichtet, dass das Heck in Richtung der Fahrbahn bzw. eines Fußwegs zeigt. Weiterhin ist das Fahrzeug 1 bezüglich seiner Längsachse zentral in der Abholposition 417 angeordnet. Damit wird die zuvor vorgegebene Komfortbedingung erfüllt, dass das Fahrzeug 1 bequem durch den Kofferraum 11 beladen werden kann. Die Heckklappen 15 des Fahrzeugs 1 lassen sich öffnen, ohne dass sie auf den Zugang 412 ragen oder andere Abholpositionen 415, 419 blockieren.

Im Beispiel nach Figur 5 d) ist das Fahrzeug 1 wieder an der Abholposition 417 quer zur Fahrbahnrichtung 80 abgestellt. Das Fahrzeug 1 ist derart innerhalb der Abholposition 413 ausgerichtet, dass die Front des Fahrzeugs 1 in Richtung der Fahrbahn zeigt. Weiterhin ist das Fahrzeug 1 bezüglich seiner Längsachse nach rechts verschoben in der Abholposition 417 angeordnet. Damit wird die zuvor vorgegebene Komfortbedingung erfüllt, dass ein Fahrer durch die linke Fahrertür 14 bequem in das Fahrzeug 1 einsteigen kann. Weiterhin ist das Fahrzeug 1 in diesem Beispiel so ausgerichtet, dass der Fahrer nach der Übernahme der Kontrolle über das Fahrzeug 1 vorwärts in Richtung 90 ausparken kann und sich einfach in die Fahrbahnrichtung 80 weiterbewegen kann, insbesondere ohne ein kompliziertes Auspark- oder ein Wendemanöver durchführen zu müssen.

Im Beispiel nach Figur 5 e) ist das Fahrzeug 1 an der Abholposition 415 quer zur Fahrbahnrichtung 80 abgestellt. Die Abholposition 415 wird in diesem Beispiel an einer Längsseite von einer Mauer 450 begrenzt. Das Fahrzeug 1 ist derart innerhalb der Abholposition 415 derart ausgerichtet, dass das Heck in Richtung der Fahrbahn bzw. eines Fußwegs zeigt. Weiterhin ist das Fahrzeug 1 bezüglich seiner Längsachse seitlich nach rechts (bezogen auf die Vorwärtsrichtung 70 des Fahrzeugs 1) versetzt in der Abholposition 415 angeordnet. Damit wird die zuvor vorgegebene Komfortbedingung erfüllt, dass das Fahrzeug 1 ein Fahrer durch die Fahrertür 14 bequem in das Fahrzeug 1 einsteigen kann indem die Fahrertür 14 möglichst weit geöffnet werden kann, ohne an die Mauer 450 zu stoßen.

Im Beispiel nach Figur 5 f) ist das Fahrzeug 1 zunächst an der Abholposition 415 quer zur Fahrbahnrichtung 80 abgestellt. Die Abholposition 415 wieder an einer Längsseite von einer Mauer 450 begrenzt. Das Fahrzeug 1 ist wie im Beispiel zuvor derart innerhalb der Abholposition 415 derart ausgerichtet, dass das Heck in Richtung der Fahrbahn bzw. eines Fußwegs zeigt. Weiterhin ist das Fahrzeug 1 bezüglich seiner Längsachse seitlich nach rechts (bezogen auf die Vorwärtsrichtung 70 des Fahrzeugs 1) versetzt in der Abholposition 415 angeordnet. Damit wird die zuvor vorgegebene Komfortbedingung erfüllt, dass das Fahrzeug 1 ein Fahrer durch die Fahrertür 14 bequem in das Fahrzeug 1 einsteigen kann indem die Fahrertür 14 möglichst weit geöffnet werden kann, ohne an die Mauer 450 zu stoßen. Weiterhin ist das Fahrzeug so ausgerichtet, dass das Heck in Richtung des Zugangs 412 zeigt. So können die Heckklappen 15 des Fahrzeugs 1 geöffnet werden und der Kofferraum 11 des Fahrzeugs 1 kann bequem beladen werden. So können die Heckklappen 15 des Fahrzeugs 1 geöffnet werden und der Kofferraum 11 des Fahrzeugs 1 kann bequem beladen werden. Die Heckklappen 15 können auch nach oben geöffnet werden (hier nicht gezeigt). Des Weiteren hier nicht gezeigt, kann auch nur eine Heckklappe vorhanden sein, die zur Seite und / oder nach oben geöffnet sein kann.

Wenn das Beladen des Fahrzeugs 1 abgeschlossen ist, und ein Fahrer oder Passagier das Fahrzeug 1 durch die Tür 14 in das Fahrzeug 1' eingestiegen ist, wird das Fahrzeug in diesem Beispiel automatisiert in eine zweite Abholposition 413 geführt, beispielsweise entlang einer zuvor durch den Parkplatzserver 301 bestimmten Trajektorie 40. In der zweiten Abholposition 413 ist das Fahrzeug nun so positioniert, dass ein zweiter Passagier durch die Tür 13 bequem in das Fahrzeug einsteigen kann, indem es seitlich nach links versetzt bezogen auf seine Vorwärtsrichtung 70 innerhalb der Abholposition 413 angeordnet ist. In diesem Beispiel werden also zwei Abholpositionen 413, 415 ausgewählt und es wird jeweils separat für jede der Abholpositionen 413 und 415 eine Position und Ausrichtung des Fahrzeugs 1 innerhalb jeder der ausgewählten Abholpositionen 413, 415 abhängig von für jede Abholposition 413, 415 unterschiedlichen Komfortbedingungen bestimmt. Das Fahrzeug 1 wird während des Abholvorgangs zwischen den ausgewählten Abholpositionen 413, 415 automatisch umgeparkt.

Dieses Beispiel bietet damit den vorteilhaften Komfortaspekt, dass verschiedenen Komfortbedingungen kombiniert werden können, so dass zunächst unvereinbare Komfortbedingungen dennoch erfüllbar werden, indem die Abholposition zwischenzeitlich gewechselt wird. So kann das Fahrzeug 1 zunächst so geparkt werden, dass der Kofferraum komfortabel erreichbar ist. In einem folgenden Schritt kann dann das Fahrzeug automatisiert, auf, beispielsweise auf Veranlassung des Nutzers, oder wenn das System erkennt, dass der Kofferraum und die Tür 14 geschlossen sind, so umgeparkt werden, dass der Fahrer und/oder Beifahrer komfortabel einsteigen können und komfortabel, also insbesondere ohne Auspark- oder Wendemanöver losgefahren werden kann.

Zusammenfassen besteht der Kern der Erfindung darin, dass ein AVP-Fahrzeug durch die AVP-Infrastruktur so für die Abholung bereitgestellt werden kann, dass es für den Fahrer bzw. die Passagiere komfortabel ist.

## Patentansprüche

1. Verfahren zum Bestimmen einer Position und Ausrichtung eines Fahrzeugs (1) innerhalb einer von einem Parkplatz (401) umfassten Abholposition (413, 415, 417, 419), an welcher das Fahrzeug (1) nach einem automatischen Parkvorgang abgeholt werden soll, wobei das Bestimmen der Position und Ausrichtung des Fahrzeugs (1) innerhalb der Abholposition 413, 415, 417, 419) abhängig von mindestens einer vorgegebenen Komfortbedingung erfolgt, wobei eine Komfortbedingung umfasst
- einem Mindestabstand einer oder mehrerer Seitenflächen oder Türen (13, 14, 15) des Fahrzeugs (1) zu einem oder mehreren Strukturelementen (450) des Parkplatzes (401) und/oder anderen Fahrzeugen und/oder einer Fahrbahn und/oder einem Fußgängerweg (412)
und/oder
- eine bestimmte Ausrichtung des Fahrzeugs in Bezug auf eine Fahrbahnrichtung (80),
und wobei das Fahrzeug (1) automatisiert in der bestimmten Position und Ausrichtung innerhalb der Abholposition (413, 415, 417, 419) bereitgestellt wird,
**dadurch gekennzeichnet, dass**
der Parkplatz (401) mehrere verschiedenen Abholpositionen (413, 415, 417, 419) umfasst, und mindestens eine der Abholpositionen (413, 415, 417, 419), an welcher das Fahrzeug des Nutzers nach einem automatischen Parkvorgang abgeholt werden soll, abhängig von der mindestens einer vorgegebenen Komfortbedingung ausgewählt wird und eine Position und Ausrichtung des Fahrzeugs (1) innerhalb der ausgewählten Abholposition (413, 415, 417, 419) bestimmt wird.

2. Verfahren nach Anspruch 1, wobei mindestens zwei Abholpositionen (413, 415, 417, 419) ausgewählt werden und jeweils eine Position und Ausrichtung des Fahrzeugs (1) innerhalb der ausgewählten Abholpositionen (413, 415, 417, 419) bestimmt werden, wobei das Fahrzeug (1) während des Abholvorgangs zwischen den ausgewählten Abholpositionen (413, 415, 417, 419) automatisch umgeparkt wird.

3. Verfahren nach einem der Ansprüche 1 oder 2, wobei innehrhalb einer ausgewählten Abholposition (413, 415, 417, 419) mindestens zwei unterschiedliche Positionen und/oder Ausrichtungen des Fahrzeugs (1) innerhalb der ausgewählten Abholposition (413, 415, 417, 419) bestimmt werden, wobei das Fahrzeug (1) während des Abholvorgangs zwischen den unterschiedliche Positionen und/oder Ausrichtungen des Fahrzeugs (1) innerhalb der ausgewählten Abholposition (413, 415, 417, 419) automatisch umgeparkt wird.

4. Verfahren nach einem der vorherigen Ansprüche, wobei die Komfortbedingung oder die Komfortbedingungen, insbesondere während eines Reservierens einer vom Parkplatz (401) umfassten Parkposition (411), von einem Nutzer des Fahrzeugs (1) vorgegeben wird/werden, insbesondere indem der Nutzer einen bestimmten Vorgang spezifiziert, der beim Abholen des Fahrzeugs (1) durchgeführt werden soll, insbesondere ein Beladen des Kofferraums (11) des Fahrzeugs (1) und/oder ein Einsteigen von Passagieren und/oder ein Losfahren in eine bestimmte Richtung.

5. Verfahren nach einem der Ansprüche 1 bis 4, wobei einem Nutzer eine oder mehrere Abholpositionen (413, 415, 417, 419) für die die Komfortbedingungen erfüllbar sind, zur Auswahl vorgeschlagen werden.

6. Verfahren nach einem der Ansprüche 1 bis 5, wobei eine Abholposition (413, 415, 417, 419) und/oder eine Position und Ausrichtung des Fahrzeugs (1) innerhalb der Abholposition (413, 415, 417, 419) außerdem abhängig von
- dem aktuellen Verkehrsgeschehen innerhalb des Parkplatzes (401) und/oder
- Erfahrungen aus den vorangehenden Buchungen und/oder Abholungen des Nutzers und/oder
- der Anzahl der bekannten und/oder ermittelten Passagiere des Fahrzeugs (1) und/oder
- aufgrund von Analysen des/der Passagiere, insbesondere von mitgeführten Objekten,
vorgeschlagen oder ausgewählt wird/werden.

7. Verfahren nach Anspruch 6, wobei mindestens ein Vorschlag für eine Abholposition (413, 415, 417, 419) und/oder eine Position und Ausrichtung des Fahrzeugs (1) innerhalb einer Abholposition (413, 415, 417, 419) ermittelt wird und einem Nutzer bereitgestellt wird.

8. Endgerät (201) zum Vorgeben von Komfortbedingungen für einen Abholvorgang eines auf einem Parkplatz (401) automatisiert geparkten Fahrzeugs (1), umfassend:
- eine erste Erfassungseinrichtung (203) zum Erfassen mindestens einer Komfortbedingung für den Abholvorgang, und eine Kommunikationsschnittstelle (207) zum Übermitteln von Daten, die die erfassten Komfortbedingungen repräsentieren, an einen Parkplatzserver, **dadurch gekennzeichnet, dass** eine Komfortbedingung umfasst:
∘ einem Mindestabstand einer oder mehrerer Seitenflächen oder Türen (13, 14, 15) des Fahrzeugs (1) zu einem oder mehreren Strukturelementen (450) des Parkplatzes (401) und/oder anderen Fahrzeugen und/oder einer Fahrbahn und/oder einem Fußgängerweg (412) und/oder
∘ eine bestimmte Ausrichtung des Fahrzeugs in Bezug auf eine Fahrbahnrichtung (80).

9. Endgerät (201) nach Anspruch 8, wobei das Endgerät (201) ausgebildet ist, eine Position und Ausrichtung des Fahrzeugs (1) innerhalb einer Abholposition (413, 415, 417, 419) abhängig von den erfassten Komfortbedingungen zu bestimmen und mittels der Kommunikationsschnittstelle (207) über ein Kommunikationsnetzwerk an einen Parkplatzserver (301) zum Betreiben eines Parkplatzes (401) zu senden, so dass der Parkplatzserver (301) basierend auf der Abholposition (413, 415, 417, 419) und der bestimmten Position und Ausrichtung des Fahrzeugs (1) innerhalb einer Abholposition den automatischen Parkvorgang des Fahrzeugs (1) steuern kann.

10. Endgerät (201) nach einem der Ansprüche 8 oder 9, wobei das Endgerät eingerichtet ist, einem Nutzer mindestens eine von einem Parkplatz (401) umfasste Abholposition (413, 415, 417, 419) für ein Fahrzeug (1), an welcher das Fahrzeug nach einem automatischen Parkvorgang abgeholt werden soll, zur Auswahl anzubieten,
- wobei das Endgerät eine Anzeigeeinrichtung (209) zum Anzeigen mindestens einer vom Parkplatz (401) umfassten Abholposition (413, 415, 417, 419), und
- eine zweite Erfassungseinrichtung (205) zum Erfassen eines Auswahlwunsches eines Nutzers des Fahrzeugs (1) für eine der angezeigten Abholpositionen (413, 415, 417, 419) und
- eine Bestimmungseinrichtung (211) zum Bestimmen derjenigen Abholposition der mehreren Abholpositionen (413, 415, 417, 419) als die Abholposition (413, 415, 417, 419), an welcher das Fahrzeug (1) des Nutzers nach einem automatischen Parkvorgang abgeholt werden soll, die dem erfassten Auswahlwunsch entspricht, und zum Bestimmen einer Position und Ausrichtung des Fahrzeugs (1) innerhalb der ausgewählten Abholposition (413, 415, 417, 419) abhängig von den vorgegebenen Komfortbedingungen,
umfasst,
wobei die Kommunikationsschnittstelle (207) zum Übermitteln der bestimmten Abholposition an den Parkplatzserver (301) und einer der bestimmten Position und Ausrichtung des Fahrzeugs (1) innerhalb der ausgewählten Abholposition (413, 415, 417, 419) ausgebildet ist.

11. Endgerät (201) nach Anspruch 10, wobei das Endgerät eingerichtet ist, einem Nutzer mindestens einen Vorschlag für eine Abholposition und/oder eine Position und Ausrichtung des Fahrzeugs (1) innerhalb einer Abholposition (413, 415, 417, 419) abhängig von
- dem aktuellen Verkehrsgeschehen innerhalb des Parkplatzes (401) und/oder
- Erfahrungen aus den vorangehenden Buchungen und/oder Abholungen und/oder
- der Anzahl der bekannten und/oder ermittelten Passagiere des Fahrzeugs (1) und/oder
- aufgrund von Analysen des/der Passagiere, insbesondere von mitgeführten Objekten
auszugeben.

12. Parkplatzserver (301) zum Betreiben eines Parkplatzes (401), umfassend:
- eine Recheneinheit (302), welche ausgebildet ist, ein Verfahren nach einem der Ansprüche 1 bis 7 auszuführen;
- eine Kommunikationsschnittstelle (303), die ausgebildet ist, über ein Kommunikationsnetzwerk Daten repräsentierend mindestens eine Komfortbedingung und/oder Daten repräsentierend eine Position und Ausrichtung eines Fahrzeugs (1) innerhalb einer von dem Parkplatz (401) umfassten Abholposition (413, 415, 417, 419) von einem Endgerät, insbesondere einem Endgerät (201) nach einem der Ansprüche 8 bis 11, zu empfangen,
- wobei der Parkplatzserver (301) ausgebildet ist, einen automatischen Parkvorgang für ein Fahrzeug (1) basierend auf der bestimmten Position und Ausrichtung des Fahrzeugs innerhalb einer Abholposition zu steuern.

13. Parkplatzserver (301) nach Anspruch 12, wobei die
Kommunikationsschnittstelle (303) ausgebildet ist, Positionsdaten von mehreren vom Parkplatz (401) umfassten Abholpositionen (413, 415, 417, 419) über das Kommunikationsnetzwerk an das Endgerät (301) des Nutzers zu senden so, so dass das Endgerät (301) basierend auf den Positionsdaten die mehreren Abholpositionen (413, 415, 417, 419) anzeigen kann.

14. Parkplatz (401) für Fahrzeuge, umfassend:
- eine oder mehrere Abholpositionen (413, 415, 417, 419), an denen ein Fahrzeug (1) nach einer Durchführung eines automatischen Parkvorgangs abgeholt werden kann, und
- den Parkplatzserver (301) nach Anspruch 12 oder 13.

15. Computerprogramm, umfassend Programmcode zur Durchführung des Verfahrens nach einem der Ansprüche 1 bis 7, wenn das Computerprogramm auf einem Computer ausgeführt wird.

## Claims

1. Method for determining a position and orientation of a vehicle (1) within a pick-up position (413, 415, 417, 419) which is included in a parking area (401) and at which the vehicle (1) is intended to be picked up after an automatic parking process, wherein the position and orientation of the vehicle (1) within the pick-up position (413, 415, 417, 419) are determined on the basis of at least one specified comfort condition, wherein a comfort condition comprises
- a minimum distance between one or more side surfaces or doors (13, 14, 15) of the vehicle (1) and one or more structural elements (450) of the parking area (401) and/or other vehicles and/or a road and/or a pedestrian walkway (412),
and/or
- a determined orientation of the vehicle in relation to a road direction (80),
and wherein the vehicle (1) is provided automatically in the determined position and orientation within the pick-up position (413, 415, 417, 419),
**characterized in that**
the parking area (401) comprises a plurality of different pick-up positions (413, 415, 417, 419), and at least one of the pick-up positions (413, 415, 417, 419), at which the user's vehicle is intended to be picked up after an automatic parking process, is selected on the basis of the at least one specified comfort condition and a position and orientation of the vehicle (1) within the selected pick-up position (413, 415, 417, 419) are determined.

2. Method according to Claim 1, wherein at least two pick-up positions (413, 415, 417, 419) are selected and a position and orientation of the vehicle (1) within the selected pick-up positions (413, 415, 417, 419) are determined in each case, wherein the vehicle (1) is automatically reparked between the selected pick-up positions (413, 415, 417, 419) during the pick-up process.

3. Method according to either of Claims 1 and 2, wherein, within a selected pick-up position (413, 415, 417, 419), at least two different positions and/or orientations of the vehicle (1) within the selected pick-up position (413, 415, 417, 419) are determined, wherein the vehicle (1) is automatically reparked between the different positions and/or orientations of the vehicle (1) within the selected pick-up position (413, 415, 417, 419) during the pick-up process.

4. Method according to one of the preceding claims, wherein the comfort condition or the comfort conditions, in particular while reserving a parking position (411) included in the parking area (401), is/are specified by a user of the vehicle (1), in particular by the user specifying a certain process that is intended to be carried out when picking up the vehicle (1), in particular loading of the boot (11) of the vehicle (1) and/or boarding of passengers and/or setting off in a certain direction.

5. Method according to one of Claims 1 to 4, wherein one or more pick-up positions (413, 415, 417, 419), for which the comfort conditions can be met, are proposed to a user for selection.

6. Method according to one of Claims 1 to 5, wherein a pick-up position (413, 415, 417, 419) and/or a position and orientation of the vehicle (1) within the pick-up position (413, 415, 417, 419) is/are also proposed or selected on the basis of
- the current traffic situation within the parking area (401) and/or
- experience from the previous bookings and/or pick-ups by the user and/or
- the number of known and/or ascertained passengers of the vehicle (1) and/or
- on the basis of analyses of the passenger(s), in particular of objects carried.

7. Method according to Claim 6, wherein at least one proposal for a pick-up position (413, 415, 417, 419) and/or a position and orientation of the vehicle (1) within a pick-up position (413, 415, 417, 419) is determined and made available to a user.

8. Terminal (201) for specifying comfort conditions for a pick-up process for a vehicle (1) parked automatically in a parking area (401), comprising:
- a first detection device (203) for detecting at least one comfort condition for the pick-up process, and a communication interface (207) for transmitting data representing the detected comfort conditions to a parking area server,
**characterized in that** a comfort condition comprises:
∘ a minimum distance between one or more side surfaces or doors (13, 14, 15) of the vehicle (1) and one or more structural elements (450) of the parking area (401) and/or other vehicles and/or a road and/or a pedestrian walkway (412) and/or
∘ a determined orientation of the vehicle in relation to a road direction (80).

9. Terminal (201) according to Claim 8, wherein the terminal (201) is designed to determine a position and orientation of the vehicle (1) within a pick-up position (413, 415, 417, 419) on the basis of the detected comfort conditions and to transmit them by means of the communication interface (207) via a communication network to a parking area server (301) for operating a parking area (401), such that the parking area server (301) can control the automatic parking process for the vehicle (1) on the basis of the pick-up position (413, 415, 417, 419) and the determined position and orientation of the vehicle (1) within a pick-up position.

10. Terminal (201) according to either of Claims 8 and 9, wherein the terminal is configured to offer a user at least one pick-up position (413, 415, 417, 419) for a vehicle (1), which is included in a parking area (401) and at which the vehicle is intended to be picked up after an automatic parking process, for selection,
- wherein the terminal comprises a display device (209) for displaying at least one pick-up position (413, 415, 417, 419) included in the parking area (401), and
- a second detection device (205) for detecting a selection request of a user of the vehicle (1) for one of the displayed pick-up positions (413, 415, 417, 419), and
- a determination device (211) for determining that pick-up position of the plurality of pick-up positions (413, 415, 417, 419) at which the user's vehicle (1) is intended to be picked up after an automatic parking process and which corresponds to the detected selection request, as the pick-up position (413, 415, 417, 419), and for determining a position and orientation of the vehicle (1) within the selected pick-up position (413, 415, 417, 419) on the basis of the specified comfort conditions,
wherein the communication interface (207) is designed to transmit the determined pick-up position to the parking area server (301) and one of the determined position and orientation of the vehicle (1) within the selected pick-up position (413, 415, 417, 419).

11. Terminal (201) according to Claim 10, wherein the terminal is configured to output to a user at least one proposal for a pick-up position and/or a position and orientation of the vehicle (1) within a pick-up position (413, 415, 417, 419) on the basis of
- the current traffic situation within the parking area (401) and/or
- experience from the previous bookings and/or pick-ups and/or
- the number of known and/or ascertained passengers of the vehicle (1) and/or
- on the basis of analyses of the passenger(s), in particular of objects carried.

12. Parking area server (301) for operating a parking area (401), comprising:
- a computing unit (302) designed to carry out a method according to one of Claims 1 to 7;
- a communication interface (303) designed to receive data representing at least one comfort condition and/or data representing a position and orientation of a vehicle (1) within a pick-up position (413, 415, 417, 419) included in the parking area (401) from a terminal, in particular, a terminal (201) according to one of Claims 8 to 11, via a communication network,
- wherein the parking area server (301) is designed to control an automatic parking process for a vehicle (1) based on the determined position and orientation of the vehicle within a pick-up position.

13. Parking area server (301) according to Claim 12, wherein the communication interface (303) is designed to transmit position data from a plurality of pick-up positions (413, 415, 417, 419) included in the parking area (401) to the user's terminal (301) via the communication network, such that the terminal (301) can display the plurality of pick-up positions (413, 415, 417, 419) on the basis of the position data.

14. Parking area (401) for vehicles, comprising:
- one or more pick-up positions (413, 415, 417, 419) at which a vehicle (1) can be picked up after an automatic parking process has been carried out, and
- the parking area server (301) according to Claim 12 or 13.

15. Computer program, comprising program code for carrying out the method according to one of Claims 1 to 7 when the computer program is executed on a computer.

## Revendications

1. Procédé de détermination d'une position et d'une orientation d'un véhicule (1) au sein d'une position de récupération (413, 415, 417, 419) couverte par une zone de stationnement (401) et sur laquelle le véhicule (1) doit être récupéré après un processus de stationnement automatique, la détermination de la position et de l'orientation du véhicule (1) au sein de la position de récupération (413, 415, 417, 419) s'effectuant en fonction d'au moins une condition de confort spécifiée, une condition de confort comprenant
- une distance minimale entre une ou plusieurs surfaces latérales ou portières (13, 14, 15) du véhicule (1) et un ou plusieurs éléments structuraux (450) de la zone de stationnement (401) et/ou d'autres véhicules et/ou une voie et/ou à un chemin piétonnier (412)
et/ou
- une orientation spécifique du véhicule par rapport à une direction de voie (80),
et dans lequel le véhicule (1) est automatiquement mis à disposition dans la position et l'orientation spécifiées au sein de la position de récupération (413, 415, 417, 419),
**caractérisé en ce que**
la zone de stationnement (401) comprend plusieurs positions de récupération différentes (413, 415, 417, 419), et au moins l'une des positions de récupération (413, 415, 417, 419), à laquelle le véhicule de l'utilisateur doit être récupéré après un processus de stationnement automatique, est sélectionnée en fonction de ladite au moins une condition de confort spécifiée, et une position et une orientation du véhicule (1) au sein de la position de récupération sélectionnée (413, 415, 417, 419) sont déterminées.

2. Procédé selon la revendication 1, dans lequel au moins deux positions de récupération (413, 415, 417, 419) sont sélectionnées et une position et une orientation du véhicule (1) sont respectivement déterminées au sein des positions de récupération sélectionnées (413, 415, 417, 419), le véhicule (1) étant automatiquement à nouveau stationné entre les positions de récupération sélectionnées (413, 415, 417, 419) pendant le processus de récupération.

3. Procédé selon l'une des revendications 1 ou 2, dans lequel, au sein d'une position de récupération sélectionnée (413, 415, 417, 419), au moins deux positions et/ou orientations différentes du véhicule (1) sont déterminées au sein de la position de récupération sélectionnée (413, 415, 417, 419), le véhicule (1) étant automatiquement à nouveau stationné entre les différentes positions et/ou orientations du véhicule (1) au sein de la position de récupération sélectionnée (413, 415, 417, 419) pendant le processus de récupération.

4. Procédé selon l'une des revendications précédentes, dans lequel la ou les conditions de confort est ou sont spécifiées par un utilisateur du véhicule (1), en particulier pendant la réservation d'une position de stationnement (411) couverte par la zone de stationnement (401), notamment en faisant en sorte que l'utilisateur spécifie une opération particulière à effectuer lors de la récupération du véhicule (1), en particulier un chargement du coffre (11) du véhicule (1) et/ou une montée de passagers et/ou un démarrage dans une direction spécifique.

5. Procédé selon l'une des revendications 1 à 4, dans lequel une ou plusieurs positions de récupération (413, 415, 417, 419) pour lesquelles les conditions de confort peuvent être satisfaites sont proposées à un utilisateur à des fins de sélection.

6. Procédé selon l'une des revendications 1 à 5, dans lequel une position de récupération (413, 415, 417, 419) et/ou une position et une orientation du véhicule (1) au sein de la position de récupération (413, 415, 417, 419) est ou sont en outre proposées ou sélectionnées en fonction
- de la situation actuelle du trafic au sein de la zone de stationnement (401) et/ou
- d'expériences issues des réservations et/ou récupérations précédentes de l'utilisateur et/ou
- du nombre de passagers connus et/ou déterminés du véhicule (1) et/ou
- d'analyses du/des passagers, en particulier d'objets emportés.

7. Procédé selon la revendication 6, dans lequel au moins une proposition de position de récupération (413, 415, 417, 419) et/ou d'une position et d'une orientation du véhicule (1) au sein d'une position de récupération (413, 415, 417, 419) est déterminée et fournie à un utilisateur.

8. Terminal (201) destiné à spécifier des conditions de confort pour un processus de récupération d'un véhicule (1) stationné automatiquement dans une zone de stationnement (401), comprenant :
- un premier dispositif de détection (203) destiné à détecter au moins une condition de confort pour le processus de récupération, et une interface de communication (207) destinée à transmettre des données représentant les conditions de confort détectées à un serveur de zone de stationnement, **caractérisé en ce qu'**une condition de confort comprend :
o une distance minimale d'une ou plusieurs surfaces latérales ou portières (13, 14, 15) du véhicule (1) par rapport à un ou plusieurs éléments structuraux (450) de la zone de stationnement (401) et/ou à d'autres véhicules et/ou à une voie et/ou à un chemin piétonnier (412), et/ou
o une orientation spécifique du véhicule par rapport à une direction de chaussée (80).

9. Terminal (201) selon la revendication 8, ledit terminal (201) étant conçu pour déterminer une position et une orientation du véhicule (1) au sein d'une position de récupération (413, 415, 417, 419) en fonction de conditions de confort détectées, et pour les envoyer, au moyen de l'interface de communication (207) par l'intermédiaire d'un réseau de communication, à un serveur de zone de stationnement (301) pour l'exploitation d'une zone de stationnement (401), de sorte que le serveur de zone de stationnement (301) puisse commander le processus de stationnement automatique du véhicule (1) sur la base de la position de récupération (413, 415, 417, 419) et de la position et de l'orientation déterminées du véhicule (1) au sein d'une position de récupération.

10. Terminal (201) selon l'une des revendications 8 ou 9, ledit terminal étant configuré pour proposer à un utilisateur au moins une position de récupération (413, 415, 417, 419) couverte par une zone de stationnement (401) pour un véhicule (1), à laquelle le véhicule doit être récupéré après un processus de stationnement automatique, à des fins de sélection,
- le terminal comprenant un dispositif d'affichage (209) destiné à afficher au moins une position de récupération (413, 415, 417, 419) couverte par la zone de stationnement (401), et
- un second dispositif de détection (205) destiné à détecter un souhait de sélection d'un utilisateur du véhicule (1) pour l'une des positions de récupération affichées (413, 415, 417, 419) et
- un dispositif de détermination (211) destiné à déterminer celle des multiples positions de récupération (413, 415, 417, 419), en tant que position de récupération (413, 415, 417, 419), à laquelle le véhicule (1) de l'utilisateur doit être récupéré après un processus de stationnement automatique, qui correspond au souhait de sélection détecté, et à déterminer une position et une orientation du véhicule (1) au sein de la position de récupération sélectionnée (413, 415, 417, 419) en fonction des conditions de confort spécifiées,
l'interface de communication (207) étant conçue pour transmettre la position de récupération déterminée au serveur de zone de stationnement (301) et la position et l'orientation déterminées du véhicule (1) au sein de la position de récupération sélectionnée (413, 415, 417, 419).

11. Terminal (201) selon la revendication 10, le terminal étant conçu pour délivrer à un utilisateur au moins une proposition de position de récupération et/ou une position et une orientation du véhicule (1) au sein d'une position de récupération (413, 415, 417, 419) en fonction
- de la situation actuelle du trafic au sein de la zone de stationnement (401) et/ou
- d'expériences issues des réservations et/ou récupérations précédentes et/ou
- du nombre de passagers connus et/ou déterminés du véhicule (1) et/ou
- d'analyses du/des passagers, en particulier d'objets emportés.

12. Serveur de zone de stationnement (301) destiné à l'exploitation d'une zone de stationnement (401), comprenant :
- une unité de calcul (302) conçue pour mettre en œuvre un procédé selon l'une des revendications 1 à 7 ;
- une interface de communication (303) conçue pour recevoir, par l'intermédiaire d'un réseau de communication, des données représentant au moins une condition de confort et/ou des données représentant une position et une orientation d'un véhicule (1) au sein d'une position de récupération (413, 415, 417, 419) couverte par la zone de stationnement (401), en provenance d'un terminal, en particulier d'un terminal (201) selon l'une des revendications 8 à 11,
- le serveur de zone de stationnement (301) étant conçu pour commander un processus de stationnement automatique pour un véhicule (1) sur la base de la position et de l'orientation déterminées du véhicule au sein d'une position de récupération.

13. Serveur de zone de stationnement (301) selon la revendication 12, dans lequel l'interface de communication (303) est conçue pour envoyer des données de position de multiples positions de récupération (413, 415, 417, 419) couvertes par la zone de stationnement (401) par l'intermédiaire du réseau de communication au terminal (301) de l'utilisateur, de sorte que le terminal (301) puisse afficher les multiples positions de récupération (413, 415, 417, 419) sur la base des données de position.

14. Zone de stationnement (401) pour véhicules, comprenant :
- une ou plusieurs positions de récupération (413, 415, 417, 419) auxquelles un véhicule (1) peut être récupéré après l'exécution d'un processus de stationnement automatique ; et
- le serveur de zone de stationnement (301) selon la revendication 12 ou 13.

15. Programme d'ordinateur, comprenant des codes de programme destinés à mettre en œuvre le procédé selon l'une des revendications 1 à 7 lorsque le programme d'ordinateur est exécuté sur un ordinateur.
